(19) Europäisches Patentamt
European Patent Office
Office européen des brevets

(11) **EP 4 275 894 A1**

(12) **EUROPEAN PATENT APPLICATION**
published in accordance with Art. 153(4) EPC

(43) Date of publication:
**15.11.2023 Bulletin 2023/46**

(21) Application number: **22736759.6**

(22) Date of filing: **06.01.2022**

(51) International Patent Classification (IPC):
***B32B 27/34*** *(2006.01)* ***B29B 15/08*** *(2006.01)*
***B32B 5/00*** *(2006.01)* ***B29K 101/10*** *(2006.01)*

(52) Cooperative Patent Classification (CPC):
**B29B 15/08; B32B 5/00; B32B 27/34;**
B29K 2101/10

(86) International application number:
**PCT/JP2022/000188**

(87) International publication number:
**WO 2022/149591 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.01.2021 JP 2021001225**

(71) Applicant: **Toray Industries, Inc.**
**Tokyo 103-8666 (JP)**

(72) Inventor: **SHIRAHASE, Akihiko**
**Nagoya-shi, Aichi 455-8502 (JP)**

(74) Representative: **Kador & Partner Part mbB**
**Corneliusstraße 15**
**80469 München (DE)**

(54) **REINFORCING FIBER BASE MATERIAL FOR RESIN TRANSFER MOLDING, METHOD FOR PRODUCING SAME, REINFORCING FIBER LAMINATE FOR RESIN TRANSFER MOLDING, AND FIBER-REINFORCED RESIN**

(57) An object of the present invention is to provide a reinforcing fiber base material and a reinforcing fiber laminate that exhibit a good impregnability with a matrix resin, with which a fiber-reinforced plastic excellent in mechanical properties such as impact resistance and high-temperature mechanical properties can be obtained with high productivity, and that are excellent in handleability (particularly, form stability), and a method for producing a reinforcing fiber base material for resin transfer molding.

The present invention is a reinforcing fiber base material for resin transfer molding, the reinforcing fiber base material including a resin material disposed on at least one surface of a reinforcing fiber aggregate selected from any of [1]: a reinforcing fiber yarn, [2]: a reinforcing fiber yarn group formed by aligning reinforcing fiber yarns in parallel, and [3]: a reinforcing fiber fabric including [1] or [2], the resin material being a porous resin material composed of a polyamide having a structure of General Formula (1) below:

[Chemical Formula 1]

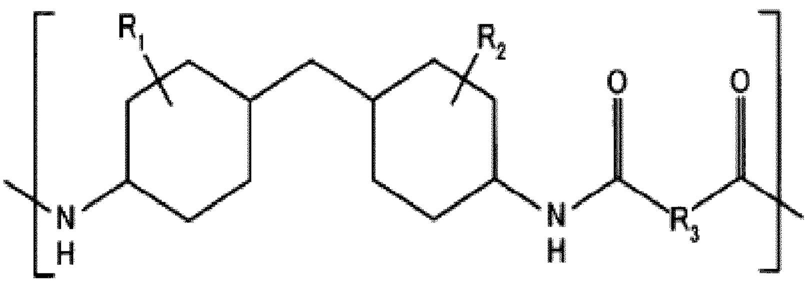

...(1)

wherein $R_1$ and $R_2$ represent hydrogen, an alkyl group having 1 to 8 carbon atoms, or a halogen atom, and may be

EP 4 275 894 A1

either identical to or different from each other, and wherein $R_3$ represents a phenylene group or a methylene group having 1 to 20 carbon atoms.

FIG. 1

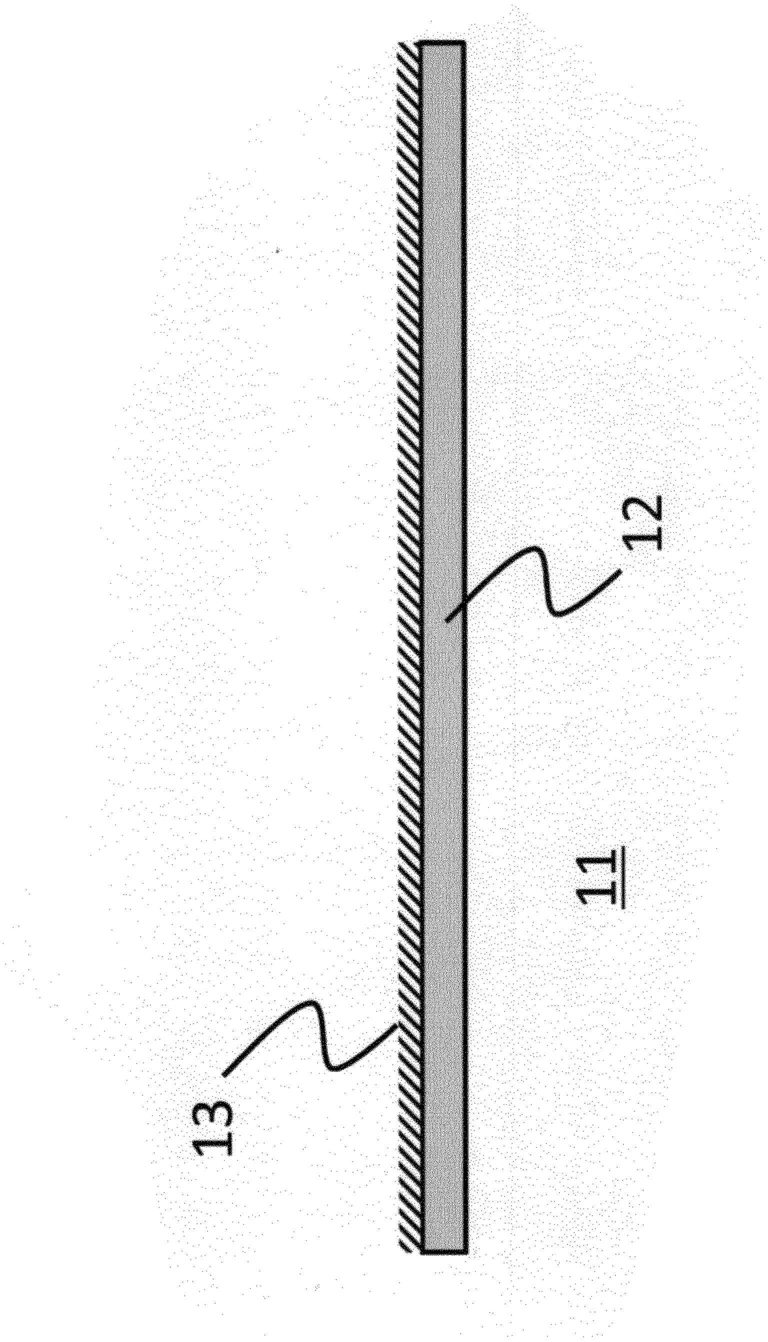

## Description

### TECHNICAL FIELD

The present invention relates to a reinforcing fiber base material for resin transfer molding, a method for the reinforcing fiber base material for resin transfer molding, a reinforcing fiber laminate for resin transfer molding, and a fiber-reinforced plastic.

### BACKGROUND ART

Fiber-reinforced plastics (FRP) obtained by impregnating reinforcing fibers with a matrix resin have been mainly used for aerospace and sports applications because the fiber-reinforced plastics satisfy required characteristics such as excellent mechanical properties and weight reduction. As a representative production method therefor, an autoclave molding method is known. In such a molding method, a prepreg in which a reinforcing fiber bundle group is impregnated with a matrix resin in advance is laminated on a molding die and heated and pressurized in an autoclave to mold FRP. Use of the prepreg has an advantage that an extremely reliable FRP can be obtained, but has a problem of high cost for production.

Meanwhile, examples of a molding method excellent in FRP productivity include resin transfer molding such as a resin transfer molding method (RTM). The method of RTM is a method of molding an FRP by later impregnating and curing a matrix resin, in which a reinforcing fiber base material including a dry reinforcing fiber bundle group that is not preimpregnated with a matrix resin is laminated in a mold, and a liquid matrix resin having a low viscosity is injected.

In the resin transfer molding method, although the FRP productivity is excellent, since the matrix resin needs to have a low viscosity, mechanical properties may not be sufficiently exhibited as compared with an FRP molded from a matrix resin having a high viscosity used for a prepreg.

As a solution to the above, for example, as disclosed in Patent Document 1 and Patent Document 2, an intermediate material in which a unidirectional layer of carbon fibers having a prescribed basis weight and a thermoplastic fiber web (nonwoven fabric) having a prescribed thickness are combined has been proposed. However, it is disclosed that when these thermoplastic fiber webs are used, certain mechanical properties can be exhibited, but since some of the thermoplastic fiber webs have low heat resistance, the high-temperature mechanical properties of the FRP cannot be sufficiently exhibited in some cases.

### PRIOR ART DOCUMENTS

### PATENT DOCUMENTS

Patent Document 1: JP 2012-506499 A
Patent Document 2: JP 2008-517812 A

### SUMMARY OF THE INVENTION

### PROBLEMS TO BE SOLVED BY THE INVENTION

The present invention has been made in order to solve such problems of the related arts, and specifically, an object thereof is to provide a reinforcing fiber base material and a reinforcing fiber laminate that exhibit a good impregnability with a matrix resin, with which a fiber-reinforced plastic excellent in mechanical properties such as impact resistance and high-temperature mechanical properties can be obtained with high productivity, and that are excellent in handleability, particularly, form stability. Another object of the present invention is to provide a fiber-reinforced plastic obtained from such a reinforcing fiber base material and a reinforcing fiber laminate, and a method for producing a reinforcing fiber base material for resin transfer molding.

### SOLUTIONS TO THE PROBLEMS

That is, the present invention is a reinforcing fiber base material for resin transfer molding, including a resin material disposed on at least one surface of a reinforcing fiber aggregate selected from any of [1]: a reinforcing fiber yarn, [2]: a reinforcing fiber yarn group formed by aligning reinforcing fiber yarns in parallel, and [3]: a reinforcing fiber fabric including reinforcing fiber yarns or a reinforcing fiber yarn group, the resin material being a porous resin material

composed of a polyamide having a structure of General Formula (1) below:

[Chemical Formula 1]

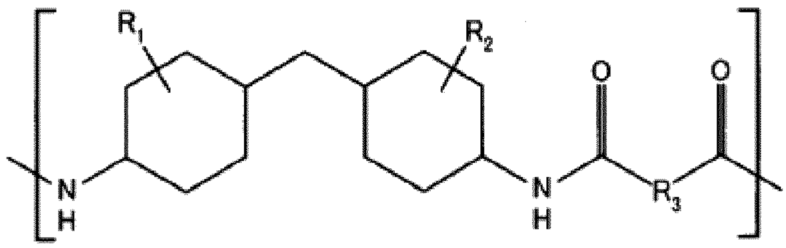

...(1)

wherein $R_1$ and $R_2$ represent hydrogen, an alkyl group having 1 to 8 carbon atoms, or a halogen atom, and may be either identical to or different from each other, and wherein $R_3$ represents a phenylene group or a methylene group having 1 to 20 carbon atoms.

The present invention is a reinforcing fiber laminate for resin transfer molding, including the reinforcing fiber base material for resin transfer molding of the present invention as a reinforcing fiber.

The present invention is a fiber-reinforced plastic including the reinforcing fiber base material for resin transfer molding of the present invention or the reinforcing fiber laminate for resin transfer molding of the present invention as a reinforcing fiber.

The present invention is a method for producing a reinforcing fiber base material for resin transfer molding composed of a reinforcing fiber yarn group formed by aligning reinforcing fiber yarns in parallel, the method including disposing the reinforcing fiber yarn group in such a manner that the reinforcing fiber yarns are aligned in parallel by an automated fiber placement device.

EFFECTS OF THE INVENTION

According to the present invention, it is possible to obtain a reinforcing fiber base material and a reinforcing fiber laminate that are not only excellent in form stability but also excellent in resin impregnability during RTM molding, and it is possible to obtain an FRP that is excellent in impact resistance and mechanical properties at a high temperature after molding.

BRIEF DESCRIPTION OF THE DRAWINGS

Fig. 1 is a schematic cross-sectional view describing one aspect of a reinforcing fiber base material of the present invention.

Fig. 2 is a schematic side view illustrating one aspect of a producing device for a reinforcing fiber base material of the present invention.

Fig. 3 is a schematic perspective view illustrating one aspect of a reinforcing fiber yarn group of the present invention.

Fig. 4 is a schematic perspective view illustrating one aspect of a unidirectional woven fabric as a reinforcing fiber aggregate of the present invention.

Fig. 5 is a schematic perspective view illustrating one aspect of a bidirectional woven fabric as a reinforcing fiber aggregate of the present invention.

Fig. 6 is a schematic perspective view illustrating one aspect of a stitch fabric as a reinforcing fiber aggregate of the present invention.

EMBODIMENTS OF THE INVENTION

Hereinafter, an example of an embodiment of the present invention will be described with reference to the drawings. Hereinafter, a reinforcing fiber base material for resin transfer molding of the present invention is also simply referred to as the reinforcing fiber base material of the present invention. A reinforcing fiber laminate for resin transfer molding of the present invention is also simply referred to as the reinforcing fiber laminate of the present invention.

It is important that the reinforcing fiber base material of the present invention is composed of a reinforcing fiber aggregate selected from any of [1]: a reinforcing fiber yarn, [2]: a reinforcing fiber yarn group formed by aligning reinforcing

fiber yarns in parallel, and [3] a reinforcing fiber fabric including reinforcing fiber yarns or a reinforcing fiber yarn group.

The reinforcing fiber yarn in the present invention is a multifilament yarn, and examples thereof include glass fiber yarns, organic (Aramid, PBO, PVA, PE, and the like) fiber yarns, and carbon fiber (PAN-based, pitch-based, and the like) yarns. Among them, carbon fibers are excellent in specific strength and specific elastic modulus and hardly absorb water, and thus are preferably used as aircraft structural materials and reinforcing fibers of automobiles.

The reinforcing fiber yarn used in the present invention is present invention 3,000 to 50,000 filaments, and particularly preferably 12,000 to 24,000 filaments from the viewpoint of handleability. The form of the reinforcing fiber yarn is not particularly limited, but is preferably a non-twisted yarn excellent in stability of the width and thickness of the yarn, and is preferably an opened yarn excellent in fiber orientation.

An automated fiber placement (AFP) or automated tape layup (ATL) device is suitably used for forming [1]: the reinforcing fiber yarn and [2] the reinforcing fiber yarn group.

A reinforcing fiber base material composed of [1]: a reinforcing fiber yarn is produced, for example, using a device illustrated in Fig. 2. Specifically, a reinforcing fiber yarn 22 pulled out from a bobbin 20 is opened by an opening unit 201, adjusted to a desired width by width regulating rollers 202, then overlapped with a resin material 23 (preferably, a porous resin material) slit to a desired width in advance, heated by a heater 203, and pressure-bonded by press rolls 204, thereby producing a reinforcing fiber base material. The opening unit 201 includes vibration rollers and the like, and includes a mechanism that applies vibration in a vertical direction orthogonal to a traveling direction of the reinforcing fiber yarn 22 or a horizontal direction. The opening unit 201 may include a heater (not illustrated) for softening a sizing agent attached to the surface of the reinforcing fiber yarn 22. At this time, when a yarn width of the reinforcing fiber yarn 22 pulled out from the bobbin 20 is defined as w0, the width of the reinforcing fiber yarn 22 after opening is widened to w1 ($w0 < w1$) and then adjusted to w2 ($w1 > w2$) by the width regulating rollers 202. w2 is preferably adjusted according to the basis weight required for a reinforcing fiber base material 21. In order to improve the width accuracy of the reinforcing fiber base material 21, the press rolls 204 preferably have a grooved structure.

The reinforcing fiber base material 21 produced by such a device has good stability in width and basis weight, and is also excellent in fiber orientation, and thus can contribute to improvement in mechanical properties (particularly, compressive strength) of an FRP. When the resin material 23 is disposed on both surfaces of the reinforcing fiber yarn group, the form stability of the reinforcing fiber base material 21 is further improved, which is preferable.

The reinforcing fiber yarn group preferably has a sheet shape in which a plurality of reinforcing fiber yarns are aligned in parallel.

Fig. 3 illustrates one aspect of [2]: a reinforcing fiber yarn group formed by aligning reinforcing fiber yarns in parallel. Reinforcing fiber yarns 32 are supplied by an AFP head 300 and disposed to be aligned in parallel. A porous resin material (not illustrated) is disposed to be superimposed on such a reinforcing fiber yarn group 31 and heat-bonded by a far-infrared heater or the like, whereby a reinforcing fiber base material can be obtained. The sheet-shaped reinforcing fiber yarn group 31 aligned and disposed by an AFP or an ATL is not restrained in a direction intersecting a fiber direction, and thus there is a problem in that the form of the reinforcing fiber yarn group 31 collapses during conveyance. With respect to such a problem, by disposing and bonding a porous resin material as described below, a binding force in the direction intersecting the fiber direction is generated, so that the problem of conveyance can be solved.

An interval between the reinforcing fiber yarns 32 when the reinforcing fiber yarns 32 are disposed to be aligned by an AFP or an ATL is preferably 0.5 to 2 mm. When the interval is less than 0.5 mm, the resin impregnability during RTM molding may be insufficient. If the interval exceeds 2 mm, when a plurality of reinforcing fiber base materials are laminated, the reinforcing fibers in the upper layer may fall between the reinforcing fiber yarns 32 in the lower layer, so that waving in a thickness direction may occur, leading to deterioration of mechanical properties (particularly, compressive strength).

A reinforcing fiber base material composed of [2]: a reinforcing fiber yarn group is produced in the same manner as the method for producing a reinforcing fiber base material composed of a reinforcing fiber yarn, for example, by hanging a plurality of bobbins 20 in the device illustrated in Fig. 2 and pulling out a plurality of reinforcing fiber yarns 22 from the bobbins while aligning the plurality of reinforcing fiber yarns in parallel. The expression "to align in parallel" means to align adjacent reinforcing fiber yarns 22 so as not to substantially cross or twist with each other, and preferably to align two adjacent reinforcing fiber yarns so that angle formed by an approximated straight line is 5° or less, more preferably 2° or less when the two adjacent reinforcing fiber yarns are approximated to a straight line within a length range of 100 mm. The expression "the reinforcing fiber yarns 22 are approximated to a straight line" means that a start point and an end point in 100 mm are connected to form a straight line. The adjacent reinforcing fiber yarns 22 may be spaced at certain intervals or may overlap each other depending on the required basis weight of the reinforcing fiber base material 21. When the reinforcing fiber yarns 22 are spaced at certain intervals, the interval is preferably 200% or less of the width of the reinforcing fiber yarn 22, and when the reinforcing fiber yarns 22 overlap each other, the interval may overlap the width of the reinforcing fiber yarn 22 by 100%. It is preferable that the reinforcing fiber yarn group pulled out while being aligned in parallel as described above passes through the opening unit to uniformly distribute the basis weight in a width direction. The reinforcing fiber base material 21 produced from such a reinforcing fiber yarn group can

also be controlled to have an arbitrary width by slitting if necessary.

Examples of [3]: the reinforcing fiber fabric including reinforcing fiber yarns or a reinforcing fiber yarn group include a woven fabric (unidirectional, bidirectional, or multiaxial), a knitted fabric, a braided fabric, a sheet aligned in one direction (unidirectional sheet), and a multiaxial sheet formed by superposing two or more unidirectional sheets. Such a reinforcing fiber aggregate may be obtained by integrating a plurality of layers by various bonding means using a stitch yarn, a knot yarn, a coarse cloth, a resin such as a binder, or the like. In particular, in the case of using the reinforcing fiber fabric as a structural (particularly, primary structural) member of a transport device (particularly, an aircraft), a unidirectional sheet, a unidirectional woven fabric, or a multiaxial sheet (particularly, a sheet obtained by stitch bonding) is preferable.

It is one preferable aspect that the reinforcing fiber aggregate is a unidirectional woven fabric constituted of a reinforcing fiber yarn group formed by aligning reinforcing fiber yarns in parallel in one direction and auxiliary fiber yarns extending in a direction intersecting the reinforcing fiber yarns.

The auxiliary fiber yarn preferably has low shrinkage, and examples thereof include a glass fiber yarn, an aramid fiber yarn, and a carbon fiber yarn, and the fineness (mass per unit length) of the auxiliary yarn is preferably 1/5 or less of the fineness of the reinforcing fiber yarn. When the fineness exceeds 1/5, the auxiliary yarn becomes thick, so that the reinforcing fiber yarns are crimped by the auxiliary yarn, leading to a slight decrease in the strength of the reinforcing fiber when an FRP is formed. On the other hand, from the viewpoint of the form stability and production stability of the reinforcing fiber aggregate, the fineness of the auxiliary yarn is preferably 0.05% or more of the fineness of the reinforcing fiber yarn. When the fineness is within the above range, the decrease in strength is minimized, and gaps between the reinforcing fiber yarns formed by the auxiliary yarns as warps during molding serve as resin flow paths, so that impregnation of the matrix resin can be promoted, which is preferable.

A schematic perspective view illustrating one aspect of a unidirectional woven fabric as a reinforcing fiber fabric is shown in Fig. 4. Reinforcing fiber yarns 42 and auxiliary yarns 43 as warps are arranged in the length direction of a unidirectional woven fabric 41, that is, the longitudinal direction, auxiliary yarns 44 as wefts thinner than the reinforcing fiber yarns 42 are arranged in the transverse direction, and the auxiliary yarns 43 as warps and the auxiliary yarns 44 as wefts are interlaced to have a woven texture illustrated in Fig. 4.

It is also a preferred aspect that the reinforcing fiber aggregate is a bidirectional woven fabric constituted of the reinforcing fiber yarn group arranged in one direction and a reinforcing fiber yarn group arranged in one direction that is different from the one direction.

A schematic perspective view illustrating one aspect of a bidirectional woven fabric as a reinforcing fiber fabric is shown in Fig. 5. Reinforcing fiber yarns 52 are arranged in the length direction of a bidirectional woven fabric 51, that is, the longitudinal direction, reinforcing fiber yarns 53 are arranged in the transverse direction, and the reinforcing fiber yarns 52 as warps and the reinforcing fiber yarns 53 as wefts are interlaced to have a woven texture illustrated in Fig. 5.

It is also a preferred aspect that the reinforcing fiber fabric is a stitch fabric in which at least two layers of the reinforcing fiber yarn group arranged in one direction and a reinforcing fiber yarn group arranged in one direction that is different from the one direction are cross-laminated and sutured and integrated with a stitch yarn.

It is also preferable that the multiaxial sheet formed by superposing two or more unidirectional sheets is fixed with a stitch yarn. The material for the stitch yarn can be selected from, for example, a polyester resin, a polyamide resin, a polyethylene resin, a vinyl alcohol resin, a polyphenylene sulfide resin, a polyaramid resin, compositions thereof, and the like. Among them, a polyester resin or a polyamide resin is preferable.

From the viewpoint of shapability in a preforming step described below, the stitch yarn preferably has stretchability.

From the viewpoint of shapability of the fabric, spandex (polyurethane elastic fibers) and textured yarns of a polyamide resin or a polyester resin are preferable.

The fineness of the stitch yarn is preferably 1/5 or less of the fineness of the reinforcing fiber yarn in order to suppress crimping of the reinforcing fiber yarn. From the viewpoint of the form stability and production stability of the reinforcing fiber aggregate, the fineness is preferably 10 dtex or more and more preferably 30 dtex or more.

Examples of a sewn texture formed by stitch yarns 66 in suturing integration include single chain-stitch sewing and 1/1 tricot knitting.

A schematic perspective view illustrating one aspect of a stitch fabric as a reinforcing fiber fabric to be used in the present invention is shown in Fig. 6. From a lower surface of a stitch fabric 61, first, a large number of reinforcing fiber yarns are arranged in parallel in a direction oblique to a length direction A to form a $+\alpha°$ layer 62, a large number of reinforcing fiber yarns are arranged in parallel in a width direction of a reinforcing fabric to form a 90° layer 63, a large number of reinforcing fiber yarns are arranged in parallel in an oblique direction to form a $-\alpha°$ layer 64, a large number of reinforcing fiber yarns are arranged in parallel in a length direction of the reinforcing fabric to form a 0° layer 65, and these four layers are sutured and integrated with a stitch yarn 66 in a state where the four layers each having different arrangement directions are laminated.

In Fig. 6, an aggregate of reinforcing fibers having an elliptical cross-sectional shape appears as one thread,

and the stitch yarns 66 are arranged between the reinforcing fiber yarns, but the stitch yarns 66 are randomly inserted into the reinforcing fiber yarns, and the aggregate of reinforcing fibers having an elliptical shape is formed by binding of the stitch yarns 66.

The four-layer configuration of +α° layer/90° layer/- α° layer/0° layer has been described as the configuration of the reinforcing fibers of the multiaxial stitch fabric 61 illustrated in Fig. 6, but the present invention is not limited thereto. For example, the configuration may include four directions of 0°, +α°, -α°, and 90° such as two layers including 0° layer/90° layer, +α° layer/-α° layer, 0° layer/+α° layer, or the like, three layers including +α° layer/0° layer/-α° layer, +α° layer/-α° layer/0° layer, or the like, or a layer configuration including a large number of 0° layers like 0° layer/+α° layer/0° layer/-α° layer/90° layer/-α° layer/0° layer/+α° layer/0° layer. The configuration may include any of 0°, +α°, -α°, and 90°. A bias angle α° is preferably 45° from the viewpoint of laminating the stitch fabrics in the length direction of the FRP and effectively performing shear reinforcement with reinforcing fibers.

A basis weight per layer of the reinforcing fiber base material in the present invention is preferably 50 to 800 $g/m^2$. When the basis weight is 50 $g/m^2$ or more, more preferably 100 $g/m^2$ or more, and further preferably 120 $g/m^2$ or more, the number of laminated layers for obtaining a predetermined thickness of the FRP can be suppressed, and molding workability can be maintained. When the basis weight is 800 $g/m^2$ or less, more preferably 500 $g/m^2$ or less, and further preferably 300 $g/m^2$ or less, the impregnability of the matrix resin can be maintained.

When the basis weight per layer is small, gaps are formed between the reinforcing fiber yarns in the layer, a reinforcing fiber volume content Vf becomes partially nonuniform, and when molding is performed, an FRP becomes thick at a portion where the reinforcing fiber volume content Vf is large, and an FRP becomes thin at a portion where reinforcing fiber volume content Vf is small, so that an FRP having an uneven surface is obtained. In such a case, when the reinforcing fiber yarn is thinly spread by vibration rollers or air jet injection immediately before weaving, before integration processing with a stitch yarn, or/and after reinforcing fabric processing, the volume ratio of reinforcing fibers becomes uniform over the entire surface of the reinforcing fabric, and an FRP having a smooth surface can be obtained, which is preferable.

It is important that the reinforcing fiber base material of the present invention has a resin material on at least one surface of the reinforcing fiber aggregate.

When the resin material is caused to exist on at least one surface of the reinforcing fiber aggregate, the form stability, such as width and fiber orientation, of the reinforcing fiber base material, and handleability, for example, during conveyance of a sheet-shaped reinforcing fiber base material composed of a reinforcing fiber yarn group can be improved. In a laminate (preform) in which a reinforcing fiber base material or reinforcing fiber aggregate described below is laminated, the handleability of the preform can be improved by improvement of the adhesion between reinforcing fiber aggregates, impartment of moderate rigidity to the preform, improvement of the form stability by, for example, prevention of misalignment of reinforcing fibers in the preform, and the like.

The resin material disposed between the layers of the reinforcing fiber aggregate can shorten an impregnation time by securing a space for allowing a matrix resin described below to flow and diffuse, or can suppress cracks generated between the layers to impart excellent impact resistance, particularly compressive strength after impact (CAI) .

As the resin material, it is important to use a polyamide having a structure of the following General Formula (1) which has advantages in many points such as heat resistance, chemical resistance, and low water absorption.

[Chemical Formula 2]

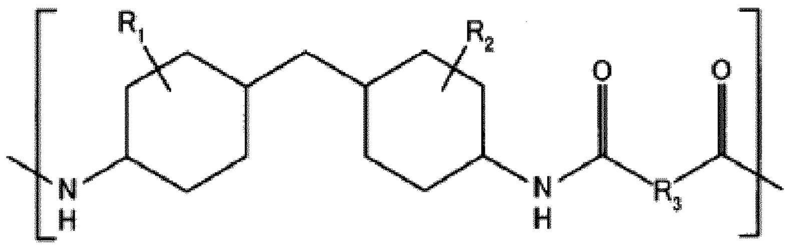

···(1)

wherein $R_1$ and $R_2$ represent hydrogen, an alkyl group having 1 to 8 carbon atoms, or a halogen atom, and may be either identical to or different from each other, and wherein $R_3$ represents a phenylene group or a methylene group having 1 to 20 carbon atoms.

That is, the resin material in the present invention is characterized by being a polyamide (hereinafter, also referred to as "polyamide A") including at least 4,4'-diaminodicyclohexylmethane and/or a derivative thereof and an aromatic or aliphatic dicarboxylic acid as essential constituents. Since such a resin material is mainly an amorphous resin, the resin material is excellent in properties at a high temperature as compared with general linear polyamides.

Alternatively, the amorphous resin is more compatible with the matrix resin than a crystalline resin, and has excellent adhesiveness. For example, even when a curing temperature Tc of the matrix resin is lower than a glass transition temperature Tg of the resin material, good adhesiveness is exhibited because of good compatibility with the matrix resin.

Even when Tc of the matrix resin exceeds the Tg, the viscosity does not rapidly decrease, and the matrix resin can be fixed between FRP layers while maintaining the form, so that impact resistance is effectively exhibited. Not only physical properties are stabilized regardless of the cooling rate after completion of a curing step, but also dimensional stability is good, and defects such as peeling at the interface with the matrix resin are suppressed.

That is, such a resin material exhibits stable physical properties regardless of molding conditions, and the stability against variations in the molding conditions is improved even when Tc of the matrix resin and Tg of the resin material are close to each other. When the resin material is in close contact with the matrix resin, physical property values such as impact resistance can be effectively exhibited, and entering of water into the interface with the matrix resin can be prevented, so that deterioration of physical properties under wet heat conditions and resistance to occurrence of cracks associated with thermal cycle load are also dramatically improved. Such a resin material can form a layer having high impact resistance between FRP layers, and can not only improve mechanical properties, particularly CAI and interlaminar shear strength (ILSS), but also enables a fiber-reinforced composite material having excellent heat resistance and water absorption resistance, particularly excellent compressive properties at a high temperature and water absorption to be obtained.

Specific examples of 4,4'-diaminodicyclohexylmethane and/or a derivative thereof include 4,4'-diaminodicyclohexylmethane, 4,4'-diamino-3,3'-dimethyldicyclohexylmethane, 4,4'-diamino-3,3'-diethyldicyclohexylmethane, 4,4'-diamino-3,3'-dipropyldicyclohexylmethane, 4,4'-diamino-3,3'-dichlorodicyclohexylmethane, and 4,4'-diamino-3,3'-dibromodicyclohexylmethane. Among them, from the viewpoint of heat resistance, 4,4'-diaminodicyclohexylmethane and 4,4'-diamino-3,3'-dimethyldicyclohexylmethane are preferable.

Specific examples of the aromatic dicarboxylic acid include phthalic acid, isophthalic acid, and terephthalic acid. Specific examples of the aliphatic dicarboxylic acid include linear saturated dicarboxylic acids such as oxalic acid, malonic acid, succinic acid, glutaric acid, adipic acid, pimelic acid, suberic acid, azelaic acid, lepargilic acid, sebacic acid, sebacic acid, and 1,12-dodecanedicarboxylic acid, chain unsaturated dicarboxylic acids such as maleic acid and fumaric acid, and alicyclic dicarboxylic acids such as cyclopropanedicarboxylic acid. 1,12-dodecanedicarboxylic acid is particularly preferable because it has a long alkyl chain and increases the impact resistance of the resin material composed of a polyamide.

$R_3$ in the above General Formula (1) is preferably a methylene group having 1 to 20 carbon atoms.

Examples of commercially available products of a polyamide (hereinafter, also referred to as "polyamide A1") including 4,4'-diaminodicyclohexylmethane and/or a derivative thereof and an aliphatic dicarboxylic acid as essential constituents among the polyamides A include "Grilamid (registered trademark)" TR90 and XE4003 (manufactured by EMS-CHEMIE (Japan) Ltd.), and "TROGAMID (registered trademark)" CX7323, CX9701, and CX9704 (manufactured by Daicel-Evonik Ltd.).

As an aspect of the polyamide, a polyamide (hereinafter, also referred to as "polyamide A2") including 4,4'-diaminodicyclohexylmethane and/or a derivative thereof, an aromatic dicarboxylic acid such as isophthalic acid, and a lactam compound such as 12-aminododecanoic acid as constituents is also preferable. Examples of commercially available products of the polyamide A2 include "Grilamid (registered trademark)" TR55 (manufactured by EMS-CHEMIE (Japan) Ltd.) including, as constituents, isophthalic acid as an aromatic dicarboxylic acid and 12-aminododecanoic acid as a lactam compound.

For example, a plurality of polyamides such as the polyamide A1 and the polyamide A2 may be mixed and used.

The resin material in the present invention preferably has a glass transition temperature Tg of 100°C or higher. By using a resin material having a high Tg, properties at a high temperature are excellent. The Tg of the resin material in the present invention is preferably 200°C or lower.

The content rate of the polyamide including 4,4'-diaminodicyclohexylmethane and/or a derivative thereof and an aromatic or aliphatic dicarboxylic acid as essential constituents is preferably 50 to 100 mass% in the entire polyamide in the resin material composed of a polyamide. From the viewpoint that the impact resistance and heat resistance of the polyamide itself can be exhibited to a maximum extent, the content rate of the polyamide is more preferably 80 to 100 mass%.

The resin material in the present invention may contain a binder component for the purpose of improving the adhesiveness between the resin material and the reinforcing fiber bundle, and for example, a thermoplastic resin or a thermosetting resin having a softening point (melting point or glass transition temperature Tg) lower than that of the polyamide in the resin material may be used.

The resin material in the present invention preferably has a melt flow rate (MRF) of 20 g/10 min or more and 300 g/10 min or less as measured by Method A in ASTM D1238-1999 under conditions of a load of 2.16 kg and a temperature of 300°C. When the MFR is 20 g/10 min or more, more preferably 25 g/10 min or more, and further preferably 30 g/10 min or more, the molten resin is easily discharged from the nozzle, and it is possible to prevent the resin material

from being decomposed when the nozzle temperature is raised to lower the melt viscosity. When the MFR is 300 g/10 min or less, more preferably 250 g/10 min or less, and further preferably 200 g/10 min or less, it is possible to prevent defects called shots due to fiber breakage and to prevent a decrease in the strength of the nonwoven fabric.

The form of the resin material in the present invention needs to be porous. The porous shape refers to a shape in which holes are formed at least in a thickness direction on a plane. With such a form of the resin material, a flow path for the matrix resin or air to the reinforcing fiber base material can be secured. Since particles are connected in a planar direction unlike the case of dispersing particles, it is possible to improve the width stability in the case of using the reinforcing fiber yarn and to improve the handleability, for example, at the time of conveying a sheet-shaped reinforcing fiber base material composed of a reinforcing fiber yarn group and the form stability of the base material in the case of using a reinforcing fiber yarn group or a fabric.

The AFP or ATL is used for the purpose of reducing the disposal rate of the reinforcing fiber base material and automating the lamination process, but the form stability of the reinforcing fiber base material is important since the width, fiber orientation, and the like after arrangement are strictly required. Since the porous resin material 23 used in the present invention has a porous form, the porous resin material is excellent in width stability and form stability due to connection in the planar direction, and can be suitably used in the AFP or ATL.

Examples of the shape of the porous resin material include a nonwoven fabric shape, a mat shape, a net shape, a mesh shape, a woven fabric shape, a knitted fabric shape, a perforated film shape, and a porous film shape. Among them, a nonwoven fabric, a mat, a net, a mesh, a woven fabric, or a knitted fabric can be obtained at low cost, and a flow path for the matrix resin or air is also formed in in the planar direction, and thus the above effect is highly exhibited, which is preferable.

When the resin material is a nonwoven fabric, examples of the form of fibers constituting the resin material include long fibers and short fibers, and the resin material can be produced by a method such as melt blowing, spun-bonding, air laid, carding, or papermaking.

The resin material in the form of a nonwoven fabric may contain a binder component for binding fibers to each other as an accessory component, but when the binder component is frequently used, properties such as heat resistance of an FRP may be adversely affected. An oil agent may be applies to a short-fiber nonwoven fabric in a spinning step, and this may adversely affect the adhesiveness with the matrix resin. Therefore, the resin material in the form of a nonwoven fabric is preferably a long-fiber nonwoven fabric such as melt blowing or spun-bonding which does not contain a binder component or an oil agent.

The fiber diameter of the fiber constituting the nonwoven fabric of the resin material is preferably 1 um or more and less than 100 μm, more preferably 5 um or more and less than 80 μm, and further preferably 10 um or more and less than 60 um. When the fiber diameter is less than 1 μm, the surface area of the resin material increases, so that the flow of the resin may be hindered in a resin impregnation step described below. When the fiber diameter is 100 um or more, the thickness between the layers of the reinforcing fiber base material in the case of an FRP is increased, and the fiber volume content (Vf) may be reduced.

The resin material in the present invention is preferably contained in an amount of 1 to 20 mass% with respect to the reinforcing fiber base material. When the resin material is contained in the above range, the form stability of the reinforcing fiber base material is provided, and a reinforcing fiber base material excellent in handleability can be obtained. When the content of the resin material is 1 mass% or more, more preferably 2 mass% or more, and further preferably 3 mass% or more, the handleability of the reinforcing fiber base material is excellent, and mechanical properties, particularly CAI can also be effectively improved. When the content of the resin material is 20 mass% or less, more preferably 18 mass% or less, and further preferably 16 mass% or less, it is possible to prevent that the reinforcing fiber volume content when an FRP is formed is excessively low to deteriorate the heat resistance, chemical resistance, and compressive strength of the FRP.

The resin material in the present invention may adhere to the reinforcing fiber aggregate and exist on at least one surface of the reinforcing fiber aggregate, and may also exist, that is, permeate inside of the reinforcing fiber aggregate. The resin material is unevenly distributed in an amount of preferably 50 mass% or more and more preferably 70 mass% or more of the entire resin material on the surface of the reinforcing fiber aggregate in order to exhibit the impact resistance and heat resistance of the resin material to a maximum extent.

Fig. 1 is a schematic cross-sectional view describing one aspect of a reinforcing fiber base material of the present invention. A reinforcing fiber base material 11 illustrated in this drawing is obtained by disposing a resin material 13 on one surface of a reinforcing fiber aggregate 12 and then integrally bonding the resin material to the reinforcing fiber aggregate.

It is preferable that a plurality of the reinforcing fiber base materials of the present invention are laminated until the thickness reaches a desired thickness prior to FRP molding to form a reinforcing fiber laminate. That is, the reinforcing fiber laminate for resin transfer molding of the present invention includes the reinforcing fiber base material for resin transfer molding of the present invention as a reinforcing fiber.

The reinforcing fiber laminate of the present invention can also be formed into a preform in which a three-dimensional shape is imparted to the carbon fiber laminate base material using a shaping mold, a jig, or the like according to the form of the intended carbon fiber-reinforced plastic molded body, and the shape is fixed. In particular, when the molding die has a three-dimensional shape, by doing so, it is possible to easily suppress the occurrence of fiber disturbance and wrinkles at the time of clamping or at the time of resin injection/impregnation.

The reinforcing fiber laminate of the present invention is preferably integrated by heat fusion or stitching. In this way, handleability and form stability can be imparted. At this time, by setting the arrangement direction of the n-th reinforcing fiber base materials of the second and subsequent layers to a direction different from the arrangement direction of the n-1-th layer, a plurality of reinforcing fiber laminates that can be handled in the same manner as the fabric can be obtained. An integrating step of such reinforcing fiber base materials may be performed on the entire surface where the reinforcing fiber base materials overlap each other, or may be partially performed. When the reinforcing fiber base materials are integrated on the entire surface, the form stability of the reinforcing fiber base material is excellent. On the other hand, when the reinforcing fiber base materials are partially integrated, deformation easily occurs at the time of shaping into a molded article in the preforming step described below. That is, the shapability is good. Therefore, it is preferable to appropriately use the integration methods depending on the complexity of the shape of the molded article.

The fiber-reinforced plastic (FRP) of the present invention includes the reinforcing fiber base material for resin transfer molding of the present invention or the reinforcing fiber laminate for resin transfer molding of the present invention as a reinforcing fiber.

The FRP of the present invention is preferably obtained by impregnating the reinforcing fiber base material for molding of the present invention or the reinforcing fiber laminate of the present invention as a reinforcing fiber with a matrix resin.

Such a matrix resin is solidified (cured or polymerized) as necessary. Preferable examples of such a matrix resin include thermosetting resins and thermoplastic resins for RIM (Reaction Injection Molding), and among them, at least one selected from an epoxy resin, a phenol resin, a vinyl ester resin, an unsaturated polyester resin, a cyanate ester resin, a bismaleimide resin, and a benzoxazine resin, which are suitable for resin transfer molding, is preferable.

In the FRP of the present invention, an absolute value of a solubility parameter difference between the matrix resin and the resin material of the reinforcing fiber base material for resin transfer molding of the present invention or the reinforcing fiber laminate for resin transfer molding of the present invention is preferably 5 or less. When the absolute value of the solubility parameter difference is 5 or less and more preferably 3 or less, peeling at the interface between the resin material and the matrix resin can be suppressed, and the effect of improving mechanical properties can be prevented from being impaired.

The solubility parameter of the resin material is determined by the following Formula (1). This method is described in "Osamu Fukumoto ed. (1988), "Polyamide Resin Handbook" NIKKAN KOGYO SHIMBUN, LTD."

[Mathematical Formula 1]

$$\delta = \left(\frac{\rho(\Delta H - \mathrm{RT})}{M}\right)^{1/2} \quad \cdots (1)$$

wherein

M: molecular weight
$\rho$: density
$\Delta$H: interaction between amide groups
T: temperature.

The solubility parameter of the matrix resin is determined by the value of the repeating unit of the polymer at a temperature of 25°C determined by the Fedors method. This method is described in F. Fedors, Polym. Eng. Sci., 14(2), 147 (1974).

In the FRP of the present invention, a difference [Tc - Tg] between a curing temperature Tc (°C) of the matrix resin and a glass transition temperature Tg (°C) of the resin material is preferably -40°C or more and 100°C or less.

In the molding of the FRP of the present invention, the difference [Tc - Tg] between the curing temperature Tc (°C) of the matrix resin to be impregnated into the reinforcing fiber base material for resin transfer molding or the reinforcing fiber laminate for resin transfer molding as a reinforcing fiber and the glass transition temperature Tg (°C) of the resin material is preferably - 40°C or more and 100°C or less. When [Tc - Tg] is 100°C or less, the viscosity of the molten

resin material does not excessively decrease, and deformation of the resin material between FRP layers can be suppressed to effectively improve impact resistance. When [Tc - Tg] is -40°C or more, adhesiveness with the matrix resin becomes sufficient, and it is possible to effectively obtain improvement in impact resistance, physical properties under wet heat conditions, and the like, and improvement in resistance to occurrence of cracks associated with a thermal cycle load.

In the FRP of the present invention, the volume fraction Vf occupied by the reinforcing fibers is preferably in a range of 53 to 65%. Vf was defined by the following formula.

$$Vf = (W \times 100)/(\rho \times T)$$

wherein

Vf: volume fraction (vol%) occupied by reinforcing fibers in the fiber-reinforced plastic
W: mass ($g/cm^2$) of reinforcing fibers per 1 $cm^2$ of the reinforcing fiber base material
ρ: density ($g/cm^3$) of reinforcing fiber
T: thickness (cm) of the fiber-reinforced plastic.

When Vf is within a range of 53 to 65%, excellent mechanical properties of the fiber-reinforced plastic can be exhibited to a maximum extent. When Vf is 53% or more, the weight reduction effect is excellent, and when Vf is 65% or less, moldability in the resin transfer molding described above is excellent, and mechanical properties, particularly impact resistance is also excellent.

In the FRP of the present invention, a compressive strength at room temperature after impact application defined by SACMA-SRM-2R-94 is preferably 240 MPa or more. SACMA stands for Suppliers of Advanced Composite Materials Association, and SACMA-SRM-2R-94 is a standard of a test method defined herein. The compressive strength at room temperature after impact application is measured at an impact energy of 270 inch-pounds under Dry conditions according to SACMA-SRM-2R-94. When the compressive strength at room temperature after impact application is 240 MPa or more within a range in which the Vf is 53 to 65%, a material satisfying both the weight reduction effect and the mechanical properties can be obtained. The fiber-reinforced plastic satisfying such requirements is used in a wide variety of applications because of excellent mechanical properties and weight reduction effect of the fiber-reinforced plastic. The FRP of the present invention is not particularly limited, but is used for a primary structural member, a secondary structural member, an exterior member, an interior member, parts thereof, or the like in a transport device such as an aircraft, an automobile, or a ship, and the effect thereof is exhibited to a maximum extent.

Since the FRP of the present invention has excellent mechanical properties and is lightweight, the FRP is suitable as a primary structural member, a secondary structural member, an exterior member, or an interior member in any of transport devices of an aircraft, an automobile, and a ship.

A method for molding an FRP using the reinforcing fiber base material in the present invention will be described.

Among the reinforcing fiber base materials in the present invention, reinforcing fiber base materials composed of a reinforcing fiber yarn and a reinforcing fiber yarn group are disposed to be aligned in a desired shape by an AFP or ATL device.

Such a disposing step may be performed in a two-dimensional planar shape or may be performed in a three-dimensional shape. In the case of a two-dimensional planar shape, a sheet-shaped reinforcing fiber base material that is easy to convey for each layer can be produced by disposing a reinforcing fiber base material for each layer and then disposing and bonding a porous resin material, and the reinforcing fiber base material can be conveyed to a shaping mold prepared separately without losing the shape in a state of being aligned. When the porous resin material to be disposed at this time has at least a partial notch, the shapability in the preforming step described below is further improved, which is preferable. As a conveyance means, a conveyance means using a method such as static electricity, suction, or needle pricking can be used.

The reinforcing fiber base material in the present invention can also include a reinforcing fiber base material in which a porous resin material is disposed and bonded to a reinforcing fiber yarn group in which reinforcing fiber yarns (to which a resin material is not attached) are aligned in a desired shape by an AFP or ATL device. This makes it possible to impart properties such as impact resistance to carbon fiber yarns not having properties such as impact resistance.

After the first reinforcing fiber base material is disposed, the second and subsequent layers may be repeatedly disposed on the same plane. In such a disposing step, a heater is provided in the head portion of the AFP or ATL device, and the second and subsequent reinforcing fiber base materials are disposed while the resin material on the surface of the reinforcing fiber base material is melted, whereby the disposing step and the integrating step of the reinforcing fiber base materials can be collectively performed. At this time, by setting the arrangement direction of the n-th reinforcing fiber base materials of the second and subsequent layers to a direction different from the arrangement direction of the

n-1-th layer, a plurality of reinforcing fiber laminates that can be handled in the same manner as the fabric can be obtained.
Among the reinforcing fiber base materials in the present invention, a reinforcing fiber base material composed of a reinforcing fiber aggregate and a reinforcing fiber laminate containing a resin material between layers of a reinforcing fiber yarn group are cut into a desired shape in accordance with the shape of a molded article and then used.
The reinforcing fiber base material or reinforcing fiber laminate thus produced can be laminated one by one or a plurality of layers in a desired angular configuration, and then the preforming step can be performed to produce a preform.
The FRP of the present invention is molded by so-called resin transfer molding, and RTM (Resin Transfer Molding) or VaRTM (Vacuum assisted Resin Transfer Molding) is preferably applied. The porous resin material disposed on at least one surface of the reinforcing fiber base material in the present invention exhibits a function as a flow path (air path) when air inside the reinforcing fiber base material is discharged and a function as a resin diffusion medium. Therefore, it is possible to improve the internal quality of a molded article and to increase the speed of the resin injection step. Since the porous resin material disposed on at least one surface of the reinforcing fiber base material in the present invention is connected in the planar direction, it is possible to prevent deformation of the reinforcing fiber base material when a resin is injected at a high pressure.

EXAMPLES

Hereinafter, the present invention will be further described with reference to Examples. Raw materials used in Examples and Comparative Examples and molding methods are as follows. The present invention is not limited only to the aspects according to these Examples and Comparative Examples.

(1) Compressive strength at high temperature and water absorption

A test piece was prepared according to SACMA-SRM-1R-94, immersed in warm water at 70°C for 14 days, and then subjected to a compression test in an atmosphere at 70°C.

(2) Thermal cycle durability test

A fiber-reinforced plastic sample was cut into 50 mm × 80 mm, subjected to the following pretreatment, and then subjected to a thermal cycle test.
Pretreatment condition: immersed in warm water at 70°C for 2 weeks.
Thermal cycle condition: a cycle of a low temperature of -55°C and a high temperature of 70°C was continuously repeated 2000 times. In each cycle, both the low temperature and the high temperature were held for 5 minutes.
After completion of the thermal cycle test, a sample cross-section was cut out with a microscope and observed at a magnification of 200 times, and occurrence of peeling and cracking was determined as follows.
C: Peeling and cracking are observed.
B: Peeling is observed.
A: Peeling and cracking are not observed.

[Example 1]

(Reinforcing fiber aggregate)

As a reinforcing fiber aggregate, a reinforcing fiber yarn of a PAN-based carbon fiber having 24,000 filaments, a tensile strength of 6.0 GPa, and a tensile elastic modulus of 294 GPa was used.

(Resin material)

"Grilamid" (registered trademark) TR90 (manufactured by EMS-CHEMIE (Japan) Ltd.) was used. MFR was 40 g/10 min, and Tg was 160°C.

(Porous resin material)

A 20 um-thick unstretched film made of the resin material was prepared, and a perforated film in which holes with a diameter of 1 mm were formed at intersection portions of square lattice patterns with a pitch of 5 mm was prepared to obtain a porous resin material.

(Matrix resin composition)

To 100 parts by mass of the following main liquid, 39 parts by mass of the following curing liquid was added, and the mixture was uniformly stirred at 80°C to obtain a matrix resin composition.

(Main liquid)

As epoxy, 40 parts by mass of tetraglycidyl diaminodiphenylmethane type epoxy ("ARALDITE" (registered trademark) MY-721, manufactured by Huntsman International LLC), 35 parts by mass of liquid bisphenol A type epoxy resin ("EPON" (registered trademark) 825, manufactured by Mitsubishi Chemical Corporation), 15 parts by mass of diglycidyl aniline (GAN, manufactured by Nippon Kayaku Co., Ltd.), and 10 parts by mass of triglycidyl aminophenol type epoxy resin ("jER" (registered trademark) 630, manufactured by Mitsubishi Chemical Corporation) were each weighed, and stirred at 70°C for 1 hour to be uniformly dissolved.

(Curing liquid)

70 parts by mass of modified aromatic polyamine ("jER Cure" (registered trademark) W, manufactured by Mitsubishi Chemical Corporation), 20 parts by mass of 3,3'-diaminodiphenyl sulfone (manufactured by Mitsui Fine Chemicals, Inc.), and 10 parts by mass of 4,4'-diaminodiphenyl sulfone ("SEIKACURE" (registered trademark) S, manufactured by SEIKA CORPORATION) were each weighed, and stirred at 100°C for 1 hour to be uniform, and then the temperature was lowered to 70°C. Then, 2 parts by mass of t-butylcatechol (DIC-TBC, manufactured by DIC Corporation) was added as a curing accelerator, and the mixture was further stirred at 70°C for 30 minutes to be uniformly dissolved.

(Reinforcing fiber base material)

A tape-shaped reinforcing fiber base material having a width of 1/4 inches was produced using the device illustrated in Fig. 2. A basis weight of the reinforcing fiber base material was 162 g/m$^2$.

(Reinforcing fiber laminate)

For CAI measurement, the reinforcing fiber base material was laminated on a planar preform mold in the configuration of quasi-isotropic lamination $[45°/0°/-45°/90°]_{3S}$ (24 layers) using an AFP device, and then heated in an oven at 140°C for 1 hour in a state of being sealed with a bag film and a sealant and decompressed to vacuum. Here, "3S" refers to an aspect in which one set (4 layers × 2 = 8 layers) is formed by combining layers laminated in the order of the orientation angles shown in [ ] and layers laminated so as to have a symmetrical [Symmetry] arrangement, and three sets thereof are laminated (8 layers × 3 = 24 layers) (the same applies hereinafter).

Thereafter, the resulting product was taken out from the oven, the mold of the preform was cooled to room temperature, and then the pressure was released to obtain a reinforcing fiber laminate. For measurement of compressive strength at a high temperature, the preform was laminated on a planar preform mold in the configuration of six layers in the 0-degree direction using an AFP device, and then heated in an oven at 140°C for 1 hour in a state of being sealed with a bag film and a sealant and decompressed to vacuum. Thereafter, the resulting product was taken out from the oven, the mold of the preform was cooled to room temperature, and then the pressure was released to obtain a reinforcing fiber laminate.

(Fiber-reinforced plastic)

A resin diffusion medium (aluminum wire mesh) was laminated on the obtained reinforcing fiber laminate, a cavity was formed by sealing a planar molding die and a bag material with a sealant, and the laminate was placed in an oven at 100°C. After the temperature of the reinforcing fiber laminate reached 100°C, the sealed cavity was depressurized to vacuum, and the matrix resin composition was injected only at a pressure difference from the atmospheric pressure while being maintained at 100°C. After impregnation with the matrix resin composition, the temperature was raised to 180°C while continuing the pressure reduction, and the matrix resin composition was left to stand for 2 hours for curing and removed from the mold, thereby obtaining an FRP flat plate 1a for CAI measurement and an FRP flat plate 1b for measurement of compressive strength at a high temperature. The time required for injecting the matrix resin composition during molding of the FRP flat plate 1a was 60 minutes, Vf and CAI of the obtained FRP flat plate 1a were 57% and 258 MPa, respectively, and the compressive strength at a high temperature and water absorption of the FRP flat plate 1b was 1050 MPa. The result of the thermal cycle durability test was A.

[Example 2]

An FRP flat plate 2a for CAI measurement and an FRP flat plate 2b for measurement of compressive strength at a high temperature were obtained in the same manner as in Example 1, except that, as the porous resin material, the resin material was changed to a nonwoven fabric having a basis weight of 10 g/m$^2$ by a spunbonding device. The time required for injecting the matrix resin during molding of the FRP flat plate 2a was 30 minutes, Vf and CAI of the obtained FRP flat plate 2a were 60% and 252 MPa, respectively, and the compressive strength at a high temperature and water absorption of the FRP flat plate 2b was 1091 MPa. The result of the thermal cycle durability test was A.

[Example 3]

An FRP flat plate 3a for CAI measurement and an FRP flat plate 3b for measurement of compressive strength at a high temperature were obtained in the same manner as in Example 2, except that after impregnation with the matrix resin, the temperature was raised to 170°C while continuing the pressure reduction, and the matrix resin composition was left to stand for 2 hours for curing. The time required for injecting the matrix resin during molding of the FRP flat plate 3a was 30 minutes, Vf and CAI of the obtained FRP flat plate 3a were 57% and 250 MPa, respectively, and the compressive strength at a high temperature and water absorption of the FRP flat plate 1b was 1082 MPa. The result of the thermal cycle durability test was A.

[Example 4]

An FRP flat plate 4a for CAI measurement and an FRP flat plate 4b for measurement of compressive strength at a high temperature were obtained in the same manner as in Example 2, except that "Grilamid" (registered trademark) TR55 (manufactured by EMS-CHEMIE (Japan) Ltd.) was used as the resin material. MFR of the resin material was 35 g/10 min, and Tg was 165°C. The time required for injecting the matrix resin during molding of the FRP flat plate 4a was 30 minutes, Vf and CAI of the obtained FRP flat plate 4a were 58% and 260 MPa, respectively, and the compressive strength at a high temperature and water absorption of the FRP flat plate 4b was 1099 MPa. The result of the thermal cycle durability test was A.

[Example 5]

An FRP flat plate 5a for CAI measurement and an FRP flat plate 5b for measurement of compressive strength at a high temperature were obtained in the same manner as in Example 2, except that "Grilamid" (registered trademark) XE4003 (manufactured by EMS-CHEMIE (Japan) Ltd.) was used as the resin material. MFR of the resin material was 100 g/10 min, and Tg was 160°C. The time required for injecting the matrix resin during molding of the FRP flat plate 5a was 30 minutes, Vf and CAI of the obtained FRP flat plate 5a were 61% and 260 MPa, respectively, and the compressive strength at a high temperature and water absorption of the FRP flat plate 5b was 1081 MPa. The result of the thermal cycle durability test was A.

[Example 6]

(1) A first sheet in which a plurality of reinforcing fiber yarns were aligned in parallel in the +45° direction so as to have a reinforcing fiber basis weight of 130 g/m$^2$, (2) the same porous resin material as that used in Example 5, (3) a second sheet in which a plurality of reinforcing fiber yarns were aligned in the -45° direction so as to have a reinforcing fiber basis weight of 130 g/m$^2$, and (4) the same porous resin material as that used in Example 5 were laminated in this order, and then sutured and integrated using a stitch yarn composed of "Grilon" (registered trademark) K-140, 38 dtex (manufactured by manufactured by EMS-CHEMIE (Japan) Ltd.) in a chain stich structure to produce a stitch fabric having a two-layer configuration of [45°/-45°] . An FRP flat plate 6a for CAI measurement and an FRP flat plate 6b for measurement of compressive strength at a high temperature were obtained in the same manner as in Example 1, except that such a stitch fabric was laminated on a planar preform mold in the configuration of quasi-isotropic lamination $[45°/- 45°/0°/90°]_{2s}$ (16 layers). The time required for injecting the matrix resin during molding of the FRP flat plate 6a was 20 minutes, Vf and CAI of the obtained FRP flat plate 6a were 61% and 254 MPa, respectively, and the compressive strength at a high temperature and water absorption of the FRP flat plate 6b was 1067 MPa. The result of the thermal cycle durability test was A.

[Comparative Example 1]

An attempt was made to prepare a reinforcing fiber base material in the same manner as in Example 1, except that the form of the resin material was changed to a powder form. However, when the sheet-shaped reinforcing fiber yarn group aligned with an AFP was transported from the preform mold to the molding die, the shape of the reinforcing fiber yarn group was deformed, and a molded article having satisfactory quality could not be obtained.

[Comparative Example 2]

An FRP flat plate 7a for CAI measurement and an FRP flat plate 7b for measurement of compressive strength at a high temperature were obtained in the same manner as in Example 2, except that polyamide 6I (MFR: 100 g/10 min, Tg: 130°C) obtained by equimolar polymerization of hexamethylenediamine and isophthalic acid was used as the resin material. Vf and CAI of the obtained FRP flat plate 7a were 62% and 248 MPa, respectively, but the compressive strength at a high temperature and water absorption of the FRP flat plate 7b was 960 MPa, which was insufficient. The result of the thermal cycle durability test was A.

[Comparative Example 3]

An FRP flat plate 8a for CAI measurement and an FRP flat plate 8b for measurement of compressive strength at a high temperature were obtained in the same manner as in Example 3, except that as the porous resin material, "Spunfab" (registered trademark) PA1206 (manufactured by Spunfab Ltd., melting point: 178°C, Tg: 40°C) was used as a polyamide having a linear structure. The time required for injecting the matrix resin during molding of the FRP flat plate 8a was 30 minutes, Vf and CAI of the obtained FRP flat plate 8a were 57% and 230 MPa, respectively, and the compressive strength at a high temperature and water absorption of the FRP flat plate 8b was 1007 MPa. The result of the thermal cycle durability test was C.

INDUSTRIAL APPLICABILITY

Since the FRP of the present invention has excellent mechanical properties and is lightweight, the use thereof is not limited to a primary structural member, a secondary structural member, an exterior member, or an interior member in any of transport devices of an aircraft, an automobile, and a ship, and the FRP is also suitable for members for general industrial use such as wind turbine blades and medical devices such as robot arms and X-ray top plates.

DESCRIPTION OF REFERENCE SIGNS

11: Reinforcing fiber base material
12: Reinforcing fiber aggregate
13: Resin material
20: Bobbin
21: Reinforcing fiber base material
22: Reinforcing fiber yarn
23: Resin material
201: Opening unit
202: Width regulating roller
203: Heater
204: Press roll
31: Reinforcing fiber yarn group
32: Reinforcing fiber yarn
300: AFP head
41: Unidirectional woven fabric
42: Reinforcing fiber yarn (warp)
43: Auxiliary yarn (warp)
44: Auxiliary yarn (weft)
51: Bidirectional woven fabric
52: Reinforcing fiber yarn (warp)
53: Reinforcing fiber yarn (weft)

61: Stitch fabric
62: +α° reinforcing fiber layer forming reinforcing fabric
63: 90° reinforcing fiber layer forming reinforcing fabric
64: -α° reinforcing fiber layer forming reinforcing fabric
65: 0° reinforcing fiber layer forming reinforcing fabric
66: Stitch yarn

## Claims

1. A reinforcing fiber base material for resin transfer molding, comprising a resin material disposed on at least one surface of a reinforcing fiber aggregate selected from any of [1]: a reinforcing fiber yarn, [2]: a reinforcing fiber yarn group formed by aligning reinforcing fiber yarns in parallel, and [3]: a reinforcing fiber fabric including reinforcing fiber yarns or a reinforcing fiber yarn group, the resin material being a porous resin material composed of a polyamide having a structure of General Formula (1) below:

[Chemical Formula 1]

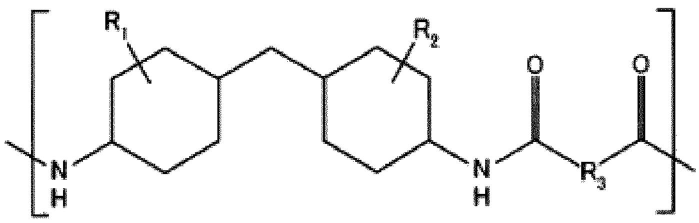

···(1)

wherein $R_1$ and $R_2$ represent hydrogen, an alkyl group having 1 to 8 carbon atoms, or a halogen atom, and may be either identical to or different from each other, and wherein $R_3$ represents a phenylene group or a methylene group having 1 to 20 carbon atoms.

2. The reinforcing fiber base material for resin transfer molding according to claim 1, wherein $R_3$ in the above General Formula (1) represents a methylene group having 1 to 20 carbon atoms.

3. The reinforcing fiber base material for resin transfer molding according to claim 1 or 2, wherein the porous resin material is any of a nonwoven fabric, a mat, a net, a mesh, a woven fabric, and a knitted fabric.

4. The reinforcing fiber base material for resin transfer molding according to claim 3, wherein the porous resin material is a long-fiber nonwoven fabric.

5. The reinforcing fiber base material for resin transfer molding according to any one of claims 1 to 4, wherein a melt flow rate of the resin material as measured under conditions of a load of 2.16 kg and a temperature of 300°C is 20 g/10 min or more and 300 g/10 min or less.

6. The reinforcing fiber base material for resin transfer molding according to any one of claims 1 to 5, wherein a glass transition temperature Tg of the resin material is 100°C or higher and 200°C or lower.

7. The reinforcing fiber base material for resin transfer molding according to any one of claims 1 to 6, wherein the resin material is contained within a range of 1 to 20 mass% with respect to the reinforcing fiber base material for resin transfer molding.

8. The reinforcing fiber base material for resin transfer molding according to any one of claims 1 to 7, wherein the reinforcing fiber yarn group [2] has a sheet shape in which a plurality of reinforcing fiber yarns are aligned in parallel.

9. The reinforcing fiber base material for resin transfer molding according to any one of claims 1 to 7, wherein the reinforcing fiber aggregate is a unidirectional woven fabric constituted of a reinforcing fiber yarn group formed by aligning reinforcing fiber yarns in parallel in one direction and auxiliary fiber yarns extending in a direction intersecting the reinforcing fiber yarns and having a fineness of 1/5 or less of a fineness of the reinforcing fiber yarns.

**10.** The reinforcing fiber base material for resin transfer molding according to any one of claims 1 to 7, wherein the reinforcing fiber aggregate is a bidirectional woven fabric constituted of the reinforcing fiber yarn group arranged in one direction and a reinforcing fiber yarn group arranged in one direction that is different from the one direction.

**11.** The reinforcing fiber base material for resin transfer molding according to any one of claims 1 to 7, wherein the reinforcing fiber fabric is a stitch fabric in which at least two layers of the reinforcing fiber yarn group arranged in one direction and a reinforcing fiber yarn group arranged in one direction that is different from the one direction are cross-laminated and sutured and integrated with a stitch yarn having a fineness of 1/5 or less of a fineness of the reinforcing fiber yarn.

**12.** A reinforcing fiber laminate for resin transfer molding, comprising the reinforcing fiber base material for resin transfer molding according to any one of claims 1 to 11 as a reinforcing fiber.

**13.** The reinforcing fiber laminate for resin transfer molding according to claim 12, the reinforcing fiber laminate being integrated by heat fusion or stitching.

**14.** A fiber-reinforced plastic comprising the reinforcing fiber base material for resin transfer molding according to any one of claims 1 to 11 or the reinforcing fiber laminate for resin transfer molding according to claim 12 or 13 as a reinforcing fiber.

**15.** The fiber-reinforced plastic according to claim 14, wherein a difference [Tc - Tg] between a curing temperature Tc (°C) of a matrix resin to be impregnated into the reinforcing fiber and a glass transition temperature Tg (°C) of the resin material is -40°C or more and 100°C or less.

**16.** A method for producing a reinforcing fiber base material for resin transfer molding composed of a reinforcing fiber yarn group formed by aligning reinforcing fiber yarns in parallel, the method comprising disposing the reinforcing fiber yarn group in such a manner that the reinforcing fiber yarns are aligned in parallel by an automated fiber placement device.

FIG. 1

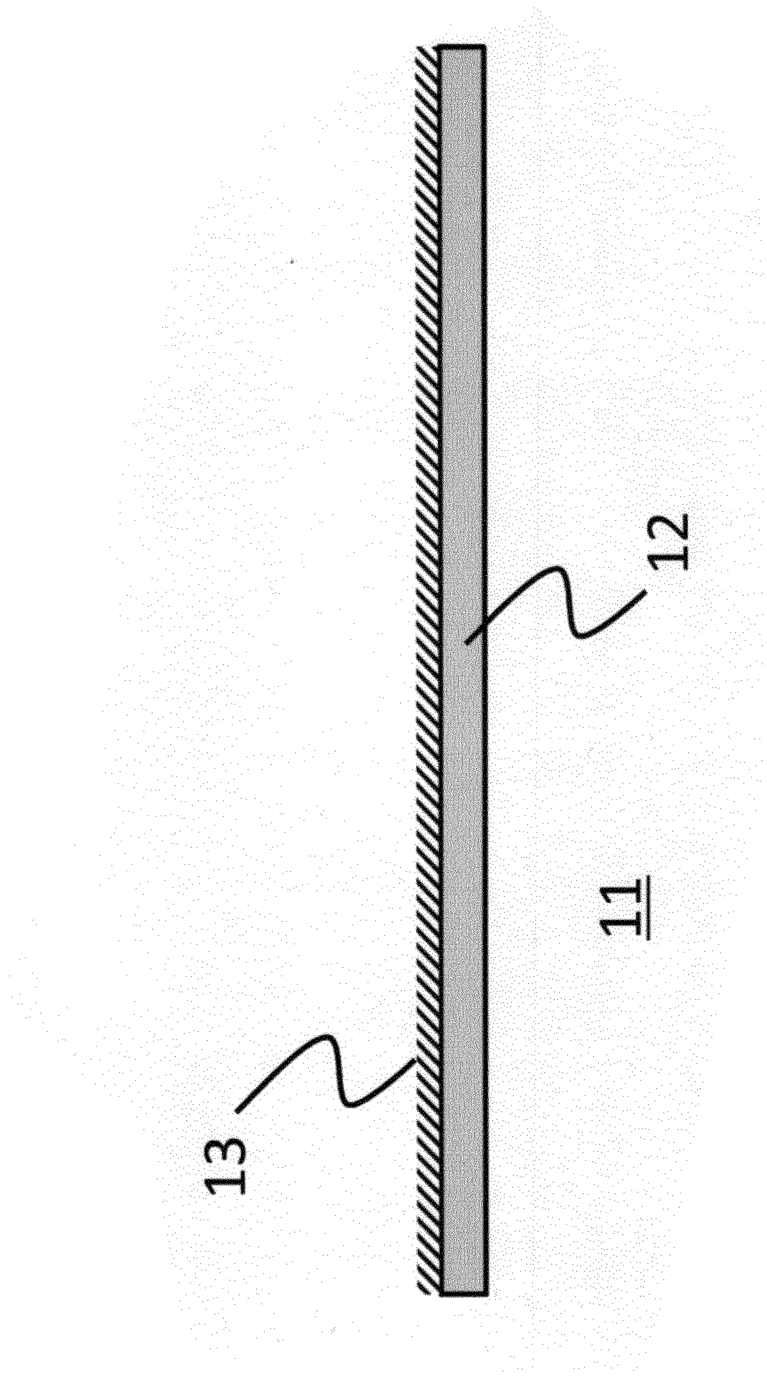

FIG. 2

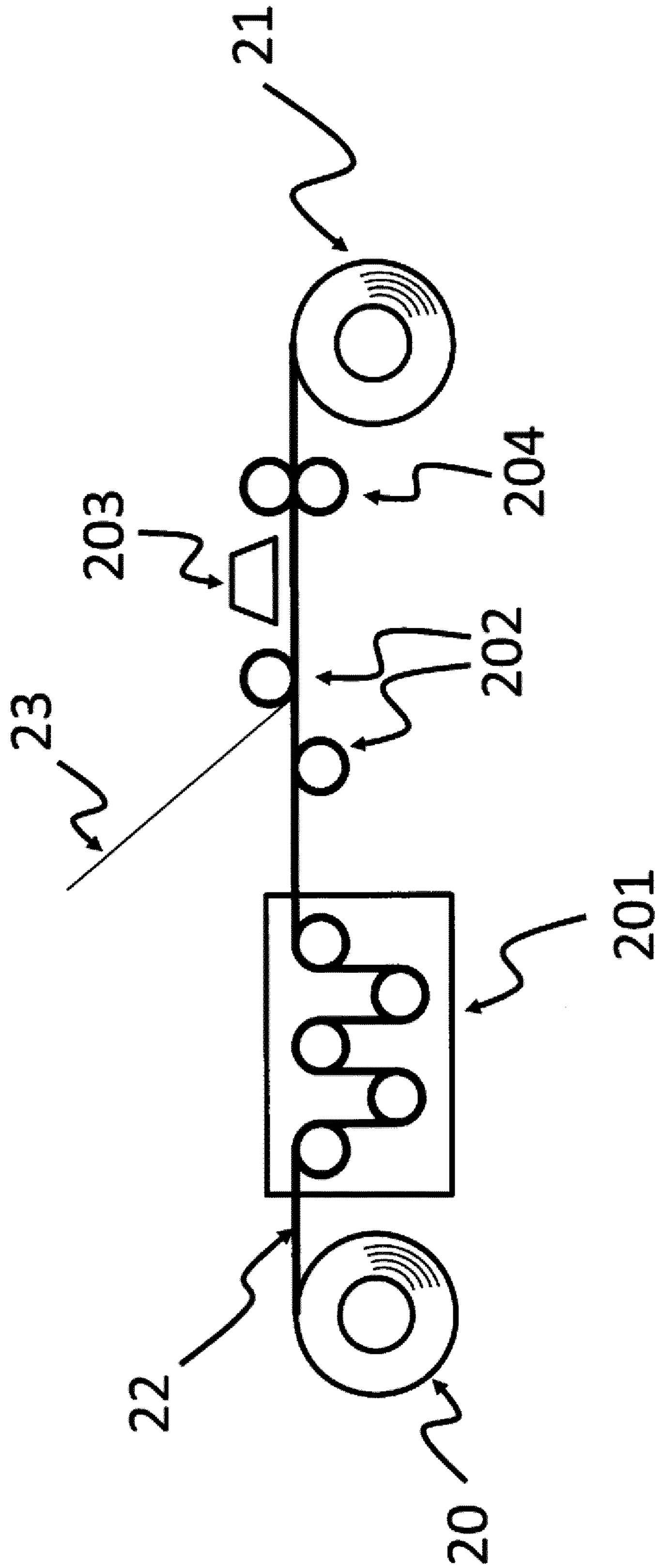

FIG. 3

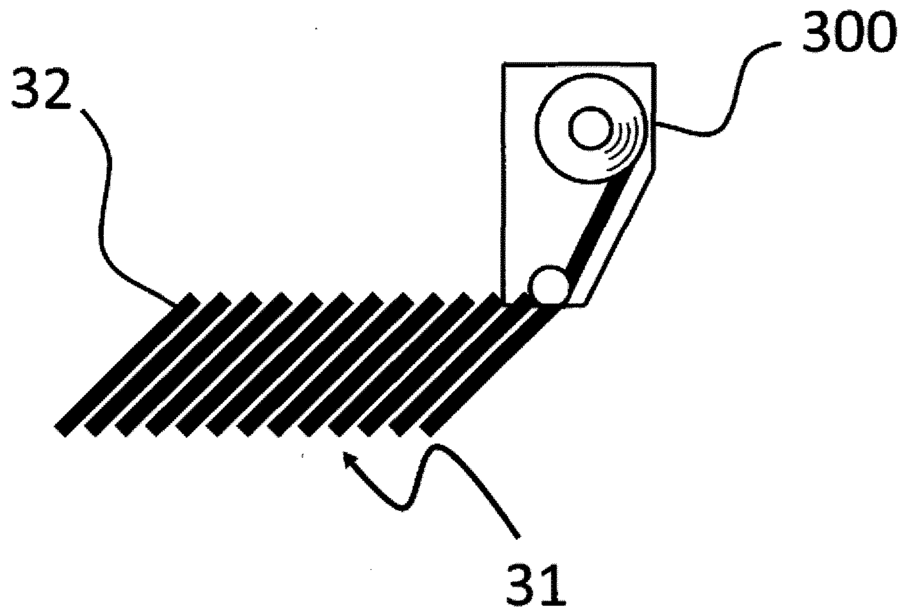

FIG. 4

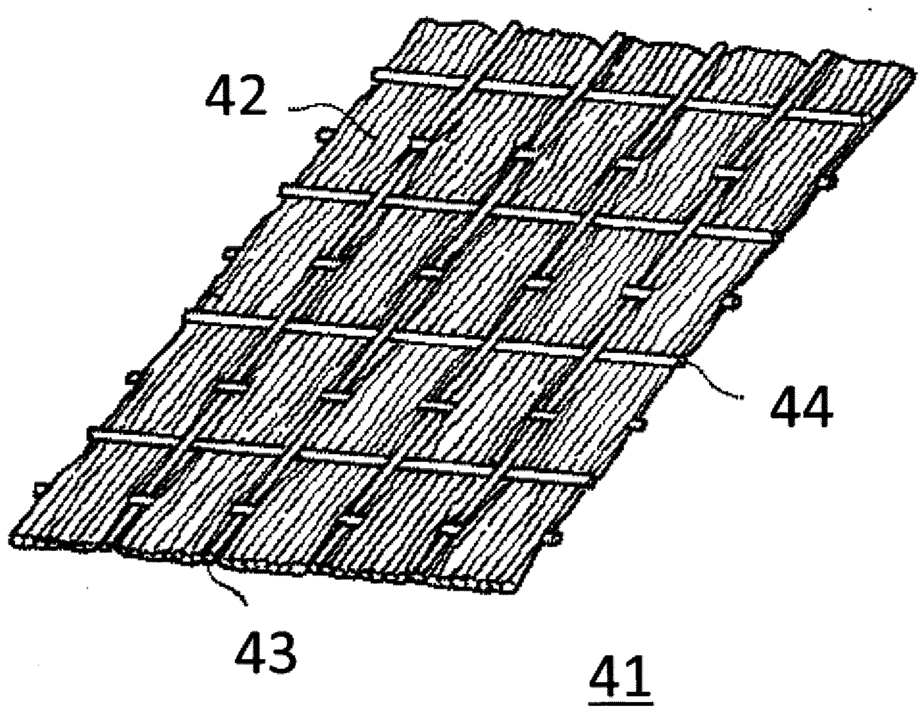

FIG. 5

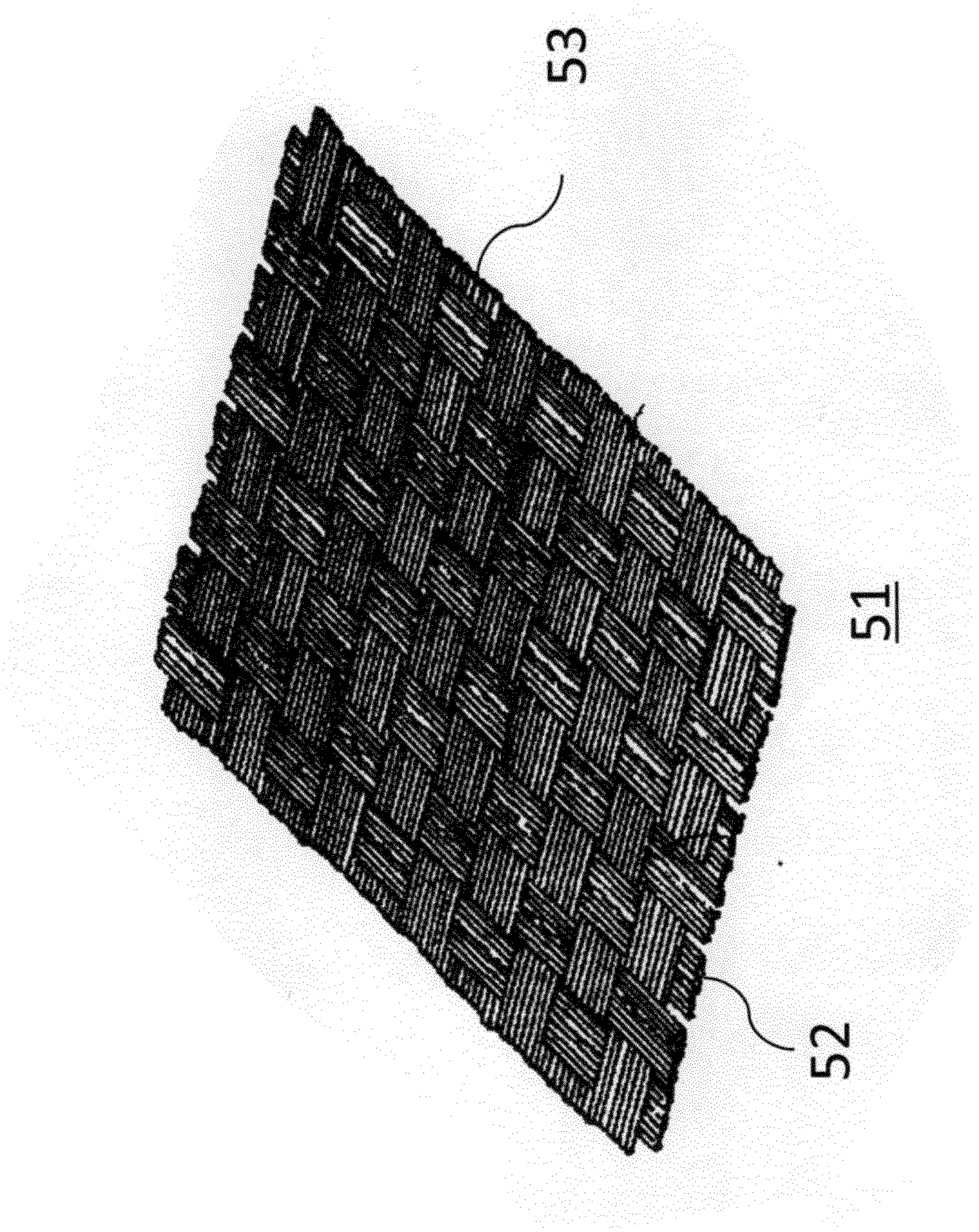

FIG. 6

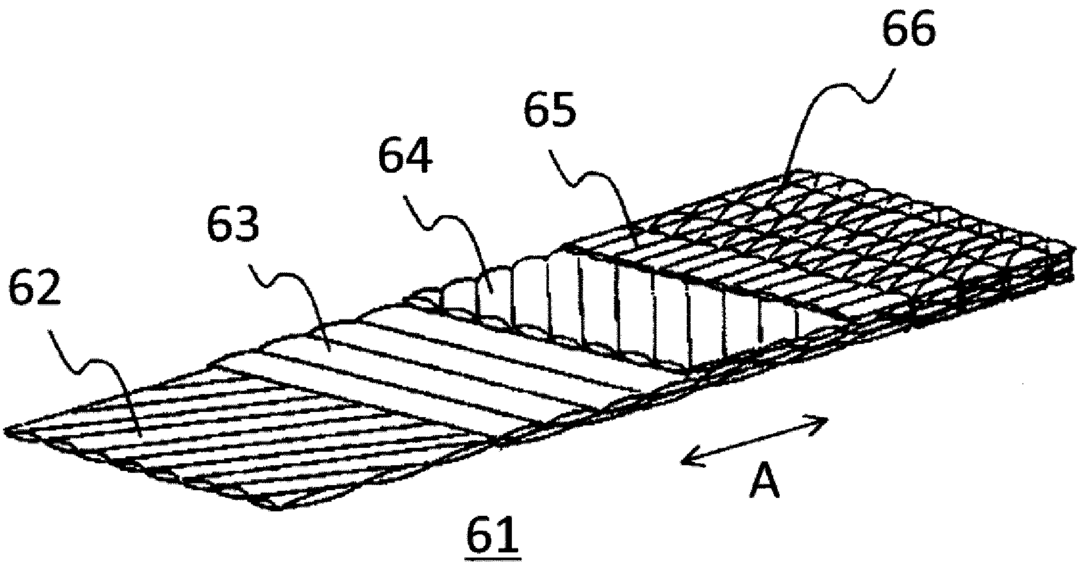

## INTERNATIONAL SEARCH REPORT

International application No.
**PCT/JP2022/000188**

**A. CLASSIFICATION OF SUBJECT MATTER**

***B32B 27/34***(2006.01)i; ***B29B 15/08***(2006.01)i; ***B32B 5/00***(2006.01)i; *B29K 101/10*(2006.01)n
FI: B32B27/34; B29B15/08; B32B5/00 A; B29K101:10

According to International Patent Classification (IPC) or to both national classification and IPC

**B. FIELDS SEARCHED**

Minimum documentation searched (classification system followed by classification symbols)

B32B27/34; B29B15/08; B32B5/00; B29K101/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-023691 A (TORAY INDUSTRIES) 13 February 2020 (2020-02-13) entire text, in particular, claims, paragraphs [0062]-[0063], [0075]-[0079], [0086]-[0101] | 16 |
| X<br>Y | JP 2020-023182 A (TORAY INDUSTRIES) 13 February 2020 (2020-02-13) entire text, in particular, claims, paragraphs [0007], [0011]-[0019], [0026]-[0033], [0043]-[0047], [0054]-[0072] | 16<br>1-15 |
| Y | WO 2011/034040 A1 (TORAY INDUSTRIES) 24 March 2011 (2011-03-24) entire text. in particular, claims, paragraphs [0028]-[0033], [0049], [0091]-[0164] | 1-15 |
| Y | JP 2003-080607 A (TORAY INDUSTRIES) 19 March 2003 (2003-03-19) entire text. in particular, claims, paragraphs [0042]-[0046], [0096]-[0124] | 1-15 |
| A | JP 2018-065999 A (TORAY INDUSTRIES) 26 April 2018 (2018-04-26) entire text | 1-16 |
| A | WO 2000/061363 A1 (MITSUBISHI RAYON CO., LTD.) 19 October 2000 (2000-10-19) entire text | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**

International application No.
**PCT/JP2022/000188**

**C. DOCUMENTS CONSIDERED TO BE RELEVANT**

| Category* | Citation of document, with indication, where appropriate, of the relevant passages | Relevant to claim No. |
|---|---|---|
| A | JP 2009-511297 A (CRC FOR ADVANCED COMPOSITE STRUCTURES LIMITED) 19 March 2009 (2009-03-19) entire text | 1-16 |

Form PCT/ISA/210 (second sheet) (January 2015)

**INTERNATIONAL SEARCH REPORT**
**Information on patent family members**

International application No.
**PCT/JP2022/000188**

| Patent document cited in search report | Publication date (day/month/year) | Patent family member(s) | Publication date (day/month/year) |
|---|---|---|---|
| JP 2020-023691 A | 13 February 2020 | (Family: none) | |
| JP 2020-023182 A | 13 February 2020 | (Family: none) | |
| WO 2011/034040 A1 | 24 March 2011 | US 2012/0178329 A1<br>entire text, in particular, claims, paragraphs [0037]-[0041], [0058], [0100]-[0210]<br>EP 2479217 A1<br>CA 2770587 A<br>CN 102498173 A | |
| JP 2003-080607 A | 19 March 2003 | JP 2008-247032 A | |
| JP 2018-065999 A | 26 April 2018 | (Family: none) | |
| WO 2000/061363 A1 | 19 October 2000 | US 2004/0137208 A1<br>entire text<br>EP 1175998 A1 | |
| JP 2009-511297 A | 19 March 2009 | US 2008/0260954 A1<br>entire text<br>WO 2007/041782 A1<br>EP 1945430 A1<br>AU 2006301926 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012506499 A
- JP 2008517812 A


### Non-patent literature cited in the description


- Polyamide Resin Handbook. NIKKAN KOGYO SHIMBUN, LTD, 1988
- **F. FEDORS.** *Polym. Eng. Sci.,* 1974, vol. 14 (2), 147